# EUROPEAN PATENT APPLICATION

(11) **EP 2 184 499 A2**
(43) Date of publication of application: **12.05.2010**
(21) Application number: 09175082.8
(22) Date of filing: 05.11.2009
(51) Int. Cl.: F16B 21/02, F16B 37/08, F16B 37/04

(54) **Clip for attaching a cover or other component**

(30) Priority: 05.11.2008 JP 2008284091
(71) Applicant: Newfrey LLC, Newark, Delaware 19711 (US)
(72) Inventor: Matsuno, Hiroto, Toyohashi-shi Aichi (JP)
(74) Representative: Haar, Lucas Heinz Jörn

(57) **Abstract**

To provide a clip that makes it possible to effect turning in the direction of tightening without any necessity of forming pressing pieces or turning prevention pieces for preventing play or preventing turning, a clip (1) is provided comprising a stud engagement part (9), a flange (10), and retainer pieces (11) extending outward in the radial direction, configured so as to clamp an attachment component 2 between the retainer pieces (11) and the flange (10), in which retainer pieces (11), in the sides thereof facing the flange (10), are formed elastic pieces (14) extending diagonally from the retainer pieces (11) toward the flange (10), which elastic pieces (14) elastically engage the attachment component and provide a force that resists the turning of the stud engagement part (9) about the axis thereof.

## Description

### Technical Field

The present invention relates to a clip that can be used to attach an attachment component, such as a cover, to a workpiece, such as a vehicle body panel. The invention further relates to a fastening assembly comprising a clip for attaching an attachment component to a stud projecting from a workpiece.

### Background of the Invention

Clips used for attaching an attachment component, such as a cover, to a workpiece, such as a vehicle body panel, are described in JP 2007-285319 A and JP 2008-128319 A. These clips, which are described in gazettes or the like, comprise cylindrical stud engagement parts for receiving studs projecting from workpieces, such as vehicle body panels, and for engaging those studs, flanges provided on the ends of the stud engagement parts opposite the stud receiving ends thereof and retainer pieces that extend outwardly in the radial direction from positions near the flanges of the stud engagement parts, which retainer pieces are formed in such lengths as will pull out from auxiliary channels formed continuously with attachment holes in the attachment components and extending outwardly in the radial direction thereof, being of such lengths also as to not pull out from said attachment holes, which clips are configured so as to clamp the attachment components between the retainer pieces and the flanges and thereby support the attachment components, with which, by engaging the stud engagement parts with the studs, the attachment components are attached to the workpieces.

### Summary of the Invention

### Problems to be Solved by the Invention.

In the clip described in JP 2007-285319 A , in order to prevent the stud engagement part engaged with a screw-threaded stud from turning in the releasing direction, a turning prevention piece that engages an auxiliary channel formed on the outside of the attachment hole is formed in the outer circumference of the stud engagement part, and in order to prevent play in the attachment component clamped between the flange and the retainer piece, a pressing piece for elastically pressing the attachment component toward the retainer piece is formed in the flange. Accordingly, in this clip, the pressing piece and turning prevention piece must be formed in order to prevent play and prevent turning. Also, when the stud engagement part is turned in the tightening direction in an attempt to make the engagement force of the stud engagement part to the screw-threaded stud stronger, the turning prevention piece for preventing turning hinders that turning.

In the clip described in JP 2008-128319 A, the stud engagement part is given a unique configuration in order to strengthen the engagement force to the screw-threaded stud, while lightening the force required for insertion to the screw-threaded stud, but the configuration for preventing the turning of the stud engagement part and preventing play is the same as that of the clip of JP 2007-285319 A. That is, a turning prevention piece for engaging an auxiliary channel is formed in the outer circumference of the stud engagement part, and in order to prevent play in the attachment component, a pressing piece for elastically pressing the attachment component in the direction of the retainer piece is formed in the flange. Accordingly, in this clip also, the pressing piece and turning prevention piece must be formed in order to prevent play and prevent turning. Also, even if the stud engagement part is turned in the direction of tightening in an attempt to strengthen the engagement force of the stud engagement part to the screw-threaded stud, the turning prevention piece for preventing turning hinders that turning.

Accordingly, an object of the present invention is to provide a clip with which the necessity of forming a pressing piece and turning prevention piece is eliminated and, further, whereby turning in the tightening direction is made possible.

In order to attain the object cited above, according to the present invention, a clip is provided comprising a cylindrical stud engagement part for receiving a stud projecting from an attachment component and engaging that stud; a flange provided at the end of the stud engagement part opposite the stud receiving end thereof; and retainer pieces that extend outwardly in the radial direction from positions near the flange of the stud engagement part; which retainer pieces are formed in such lengths as to pull out from auxiliary channels formed continuously with an attachment hole in the attachment component and extending outwardly in the radial direction thereof, being of such lengths also as to not pull out from the attachment hole; the clip being configured so as to clamp the attachment member between the retainer pieces and the flange and thereby support the attachment component, and so that the stud engagement part engages the stud and thereby attaches the attachment component to a workpiece; wherein in the retainer pieces, on the sides facing the flange, elastic pieces are formed which extend out diagonally from the retainer pieces toward the flange, which elastic pieces elastically engage the attachment component and present a force that resists the turning of the stud engagement part about the axis thereof.

As described above, elastic pieces are formed in the retainer pieces; said elastic pieces, by their turning-resisting force, work to prevent turning of the stud engagement part and also prevent play in the attachment component clamped between the retainer pieces and the flange, wherefore the necessity of forming pressing pieces and turning prevention pieces is eliminated. Also, because the elastic pieces simply press the attachment component elastically toward the flange, a worker can handle the force needed to turn the stud engagement part, can turn the stud engagement part in the direction of tightening and can make the attachment firm.

In the clip described above, the retainer pieces are formed as a pair on the outer circumferential surface of the sides of the stud engagement part, positioned 180 degrees apart about the outer circumference. The retention effect is thereby made definite. The retainer pieces are formed on the sides of the stud engagement part as plate-form members, each of a length that is shorter than the length of the auxiliary channel, as seen in the circumferential direction; and the elastic pieces are formed in cantilever shapes such that, as seen in the circumferential direction, each is continuous at one end of a retainer piece but extends from that one end of the retainer piece toward the other end so as to separate away from that retainer piece and approach the flange. In this way, the force required by a worker when turning the stud engagement part can be kept low, while the elastic force of the elastic pieces can be kept high. The elastic pieces are formed so that the length thereof in the circumferential direction is longer than that of the retainer piece and also longer than the width of the auxiliary channel; so when, after the stud engagement part has been inserted into the attachment hole of the attachment component, the retainer pieces have been passed through the auxiliary channels and the flange has been pressed in to a position at which it is flush against the attachment component, the stud engagement part is then turned about the axis thereof, the elastic pieces extending from the retainer pieces will come up against the attachment component, and, furthermore, the elastic pieces overall will come up against the attachment component so that they will thereby be bent in such attitude as to come up against the retainer pieces, and the elastic pieces will be held in positions from which they cannot pull out from the auxiliary channels. In this way, retention is definitely maintained. In the flange, finger grips are formed for turning the stud engagement part about the axis thereof. The flange is cut out in the areas where the retainer pieces and the elastic pieces are formed, as seen in a plan view of the clip, and the retainer pieces and the elastic pieces can be directly viewed in the plan view. In this way, operation of attaching the clip to an attachment component is rendered easy. It is preferable that the flange be provided at the upper end of the stud engagement part, that the retainer pieces and the elastic pieces be provided at the sides of the stud engagement part at positions that are separated from the flange by a distance corresponding to the thickness of the attachment component, and that a stud receiving opening be formed at the lower end of the stud engagement part. In this way, the operation of attaching the attachment component clamped by the flange, on the one hand, and by the retainer pieces and elastic pieces, on the other, can be accomplished easily by the operation of pressing the clamp into the stud from one side. In typical examples of use, moreover, the workpiece would be a vehicle body panel, and the attachment component a cover such as an undercover for covering the panel.

### Brief Description of the Drawings

The invention will be further described in conjunction with the accompanying drawings, which illustrate a preferred (best mode) embodiment, and wherein:
Fig. 1 is a plan view of a clip relating to one embodiment of the present invention.
Fig. 2 is a front elevation of the clip shown in Fig. 1.
Fig. 3 is a right side elevation of the clip shown in Fig. 2.
Fig. 4 is a partial diagonal view of an attachment component.
Fig. 5 is a front elevation of the clip of Fig. 1 positioned on an attachment component.
Fig. 6 is a bottom view of the attachment component and clip shown in Fig. 5.
Fig. 7 is a plan view of the attachment component and clip shown in Fig. 5.
Figs. 8A to 8D are sections showing how the relationships between the retainer pieces, elastic pieces, and auxiliary channels are changed by turning the stud engagement part.
Fig. 9 is a rear view of the clip of Fig. 1 attached to an attachment component.
Fig. 10 is a bottom view of the attachment component and clip shown in Fig. 9.
Fig. 11 is a show of how the clip shown in Fig. 2 attaches an attachment component to a workpiece.

### Detailed Description of the Invention

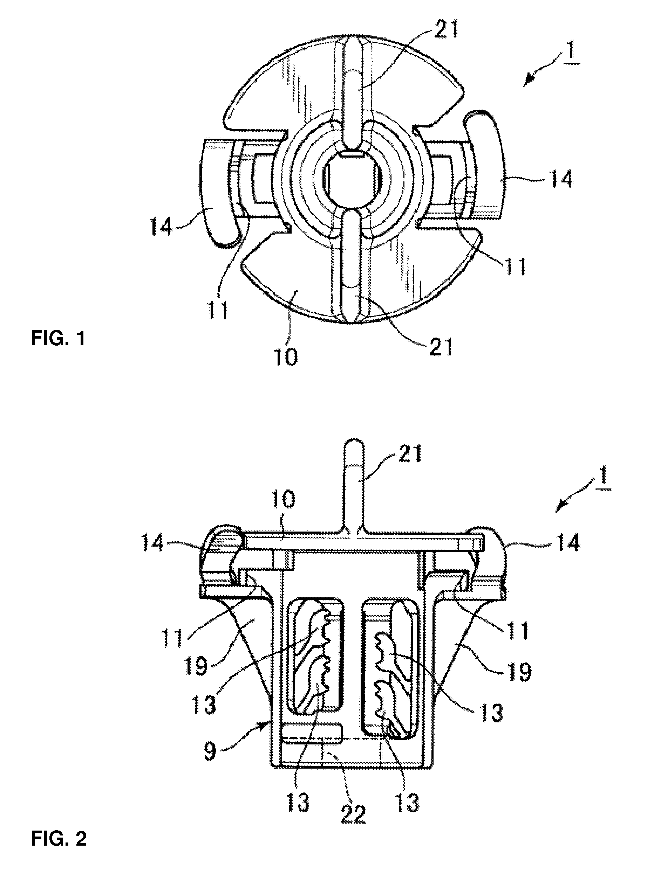

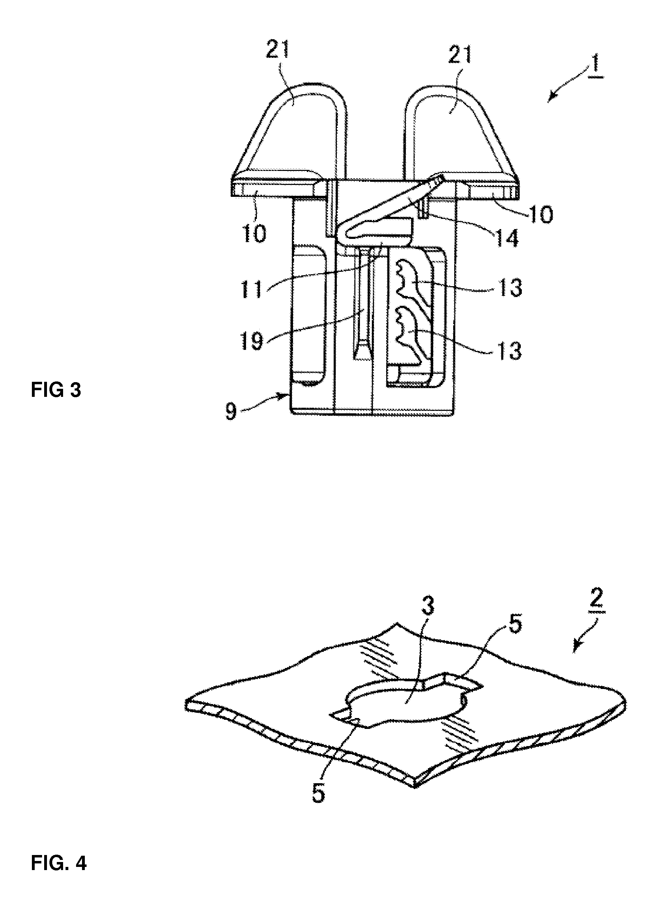

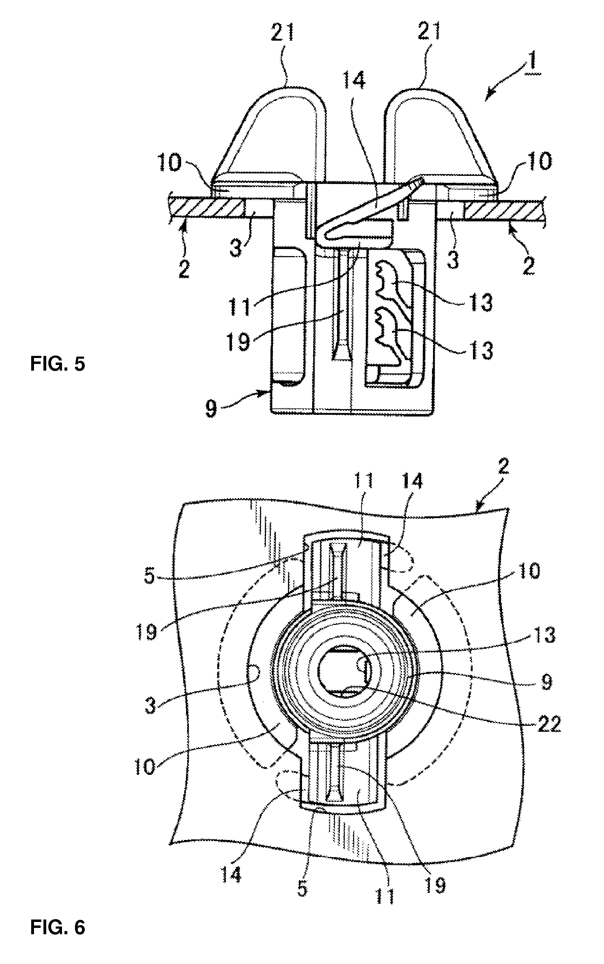

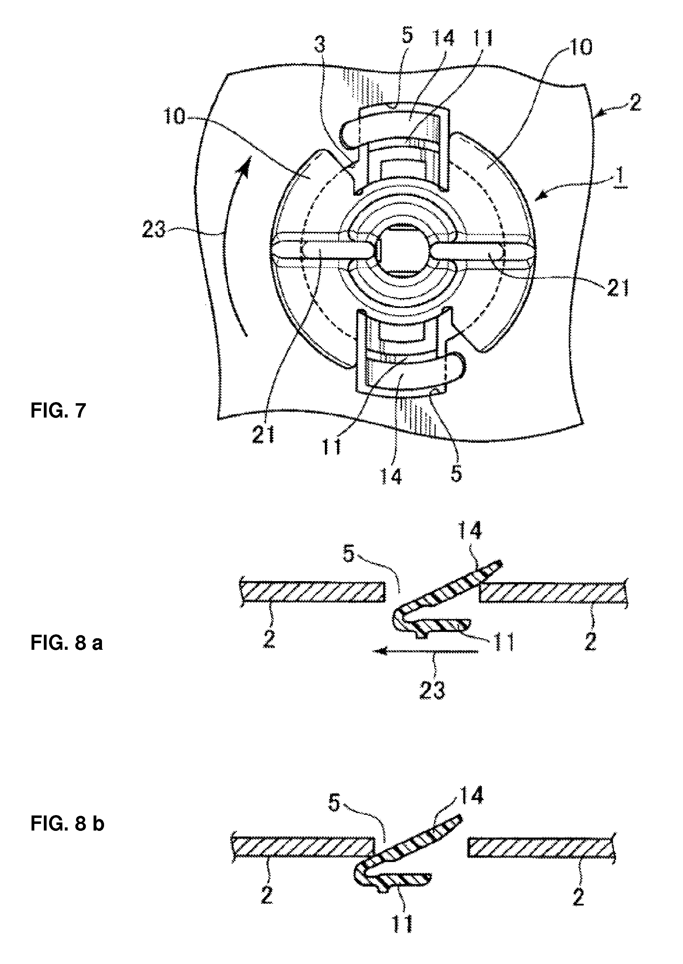

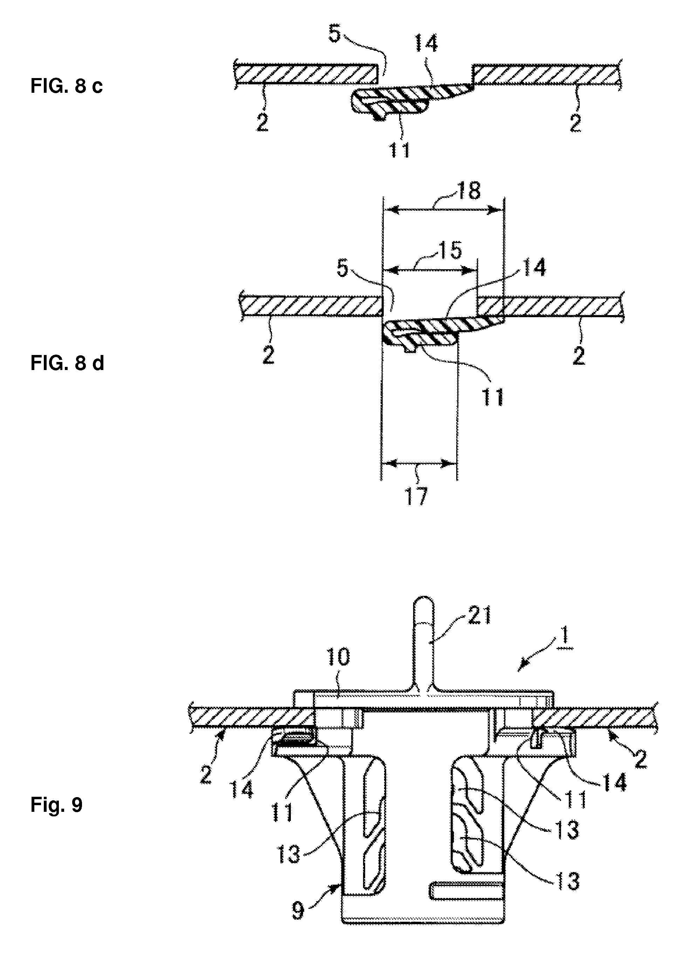

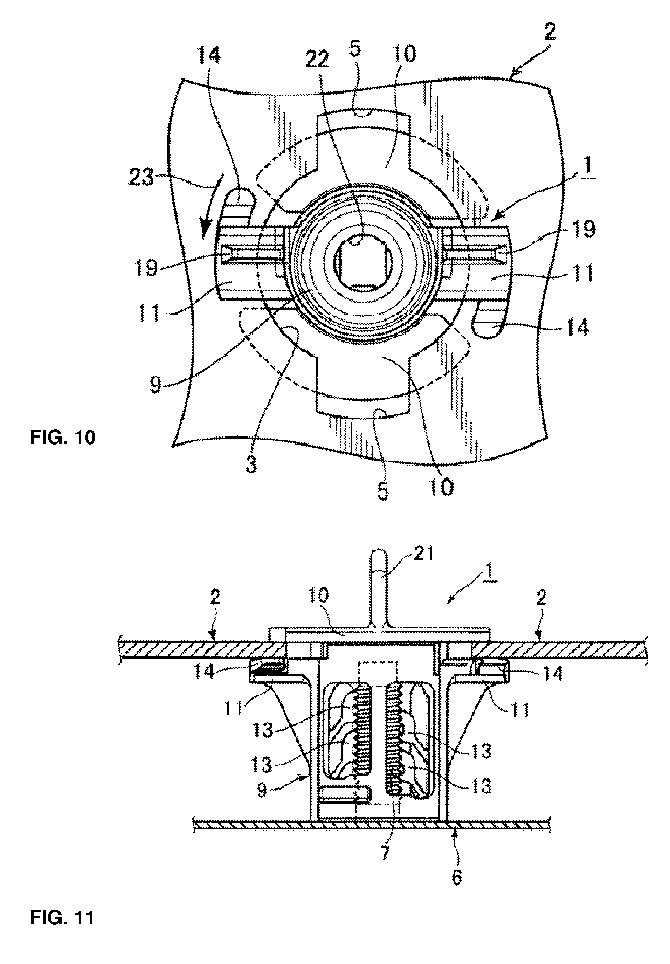

A clip 1 according to one embodiment of the present invention is now described with reference to the drawings. The configuration of the clip 1 is shown in Figs. 1 to 3. Fig. 4 represents a portion of an attachment component 2 such as a cover for covering a vehicle body panel, and shows the portion of the attachment component where an attachment hole 3, and auxiliary channels 5 formed continuously with and outwardly in the radial direction from the attachment hole 3, are formed. Figs. 5 and 6 show how the clip 1 is positioned on the attachment component 2 prior to attachment. Fig. 7 shows the procedure of attaching the clip 1 to the attachment component 2. Figs. 8A to 8D show the relationships among the auxiliary channels, the retainer pieces and the elastic pieces during the series of procedures for attaching the clip 1 to the attachment component 2. Figs. 9 and 10 show the condition after the clip 1 has been attached to the attachment component 2. Fig. 11 shows how the attachment component 2 is attached to a workpiece 6 by engaging the attachment component 2 held by the clip 1 to a stud 7 projecting from the workpiece 6, such as a vehicle body panel. In the example shown, the stud 7 is a screw-threaded stud.

The clip 1 will now be described in detail, with reference to Figs. 1 to 3. The clip 1 is integrally formed of a plastic material. The clip 1 comprises a cylindrical stud engagement part 9 having a stud receiving end and being adapted to receive and engage a stud projecting from a workpiece. A flange 10 is provided at the end of the stud engagement part 9 opposite the stud receiving end, and a pair of retainer pieces 11 extend outward in the radial direction of the stud engagement part 9 from positions near the flange 10. The stud engagement part 9 is formed in a hollow cylindrical shape, inside of which are formed multiple pairs of engagement pawls 13 for engaging the threads formed in the stud, so as to form many steps extending in the radial direction of the stud engagement part 9.

The retainer pieces 11 are formed as a pair in the outer circumferential surface on opposite sides of the stud engagement part 9, at positions that are 180 degrees apart in the circumferential direction. In this way, the retention effect is made definite. Each retainer piece 11 forms a rigid plate-shaped member at the side of the stud engagement part 9 and has a width in the circumferential direction that is shorter than the width of the auxiliary channel 5 and such a length that it can pull out of the auxiliary channels 5 in the attachment component 2 but cannot pull out of the attachment hole 3. On each of the retainer pieces 11, on the side facing the flange 10, an elastic piece 14 is formed which extends diagonally from the retainer piece 11 toward the flange 10. The elastic pieces 14 are formed as a pair, corresponding to the pair of retainer pieces 11, and are formed in cantilever shapes, continuous with one end of a retainer piece 11 and extending from that one end of the retainer piece 11 toward the other end so as to separate from the retainer piece 11 and approach the flange 10. The retainer pieces 14 extend from said one end of the retainer piece 11 in the same circumferential direction about the axis of the stud engagement part 9. In this way, the retainer pieces 11 elastically engage the attachment component 2 and provide a force that resists the turning of the stud engagement part 9 engaged with the stud 7 about the axis thereof. Furthermore, because they are of a cantilever shape, the elastic pieces 14 lessen the force required by a worker when turning the stud engagement part 9 about the axis thereof while at the same time keep the elastic force of the elastic pieces 14 high.

The elastic pieces 14 are each formed so that its length, as seen in the circumferential direction as relating to the stud engagement part 9, is longer than the retainer piece 11 and also longer than the width of the auxiliary channel 5. The relationships among the lengths of the elastic pieces 14, the lengths of the retainer pieces 11 and the widths of the auxiliary channels 5 are shown in Fig. 8D. Relative to the width 15 of the auxiliary channel 5, the width 17 in the circumferential direction of the retainer piece 11 is formed shorter, so that the retainer piece 11 can easily pass through the auxiliary channel 5, while the length 18 in the circumferential direction of the elastic piece 14 is formed longer than the width of the retainer piece 11 and also longer than the width 15 of the auxiliary channel 5. In this way, the elastic pieces 14 when inserted into the auxiliary channels 5 and after turning of the stud engagement part 9 about its axis will no longer pull out from the auxiliary channels 5. On the outer sides of the stud engagement part 9, ribs 19 are formed which extend in the axial direction so as to enhance the rigidity of the retainer pieces 11.

In the flange 10, finger grips 21 are formed for turning the stud engagement part 9 about the axis thereof. The finger grips 21 are formed in a pair of butterfly wing shapes in order to facilitate a worker's gripping them. Also, as shown in Fig. 1, the flange 10 is cut out in areas where the retainer pieces 11 and elastic pieces 14 are formed, as seen in a plan view of the clip 1. This facilitates manufacturing the die for forming the retainer pieces 11 and the elastic pieces 14. A further advantage is that, when the clip 1 is being positioned on the attachment component 2, the retainer pieces 11 and elastic pieces 14 can directly be viewed in a plan view, thus making the work of attaching the clip 1 to the attachment component 2 easy. Furthermore, the flange 10 is provided at the upper end of the stud engagement part 9, the retainer pieces 11 and elastic pieces 14 are provided on the sides of the stud engagement part 9 at positions separated from the flange 10 by a distance corresponding to the thickness of the attachment component, and the stud receiving opening 22 is formed at the lower end of the stud engagement part 9. In this way, attaching the attachment component 2 being clamped between the flange 10, on the one hand, and the retainer pieces 11 and elastic pieces 14, on the other hand, onto the stud 7 at the workpiece 6 can easily be accomplished by the operation of pressing the clip 1 into the stud 7 from one side.

The attachment component 2 is a cover, such as an undercover for covering a vehicle body panel. As shown in Fig. 4, an attachment hole 3 for attaching the clip 1 and a pair of auxiliary channels 5 continuous with the attachment hole 3 and extending outwardly in the radial direction thereof are formed in the attachment component 2. The material of the attachment component 2 may be plastic or metal.

The operation of attaching the clip 1 to the attachment component 2 is now described with reference to Figs. 5 to 10. First, as shown in Figs. 5 and 6, the clip 1 with the stud engagement part 9 is inserted into the attachment hole 3 of the attachment component 2 and pressed into a position in which the pair of retainer pieces 11 passes through the auxiliary channels 5 and the flange rests against the attachment component 2. After this pressing in, the finger grips 21 of the flange are gripped by the fingers, whereupon the flange 10 and thus the stud engagement part 9 is turned about the axis thereof, as indicated by the arrow 23 in Fig. 7. By this turning, the elastic pieces 14 extending from the retainer pieces 11 come up against the attachment component 2 and are bent towards the retainer pieces 11. This process is shown in Figs. 8A to 8C. The position shown in Fig. 8A is the initial positioning position for the clip 1, as shown in Figs. 5 to 7. When the stud engagement part 9 is turned in the direction of arrow 23 in Fig. 7, each of the elastic pieces 14 begins to come up against the attachment component 2 with the end being continuous with the retainer piece 11, as shown in Fig. 8B. When the stud engagement part 9 is turned further, as shown in Fig. 8C, each of the elastic pieces 14 is fully bent by abutting on the attachment component 2, to such an extent that it touches the retainer piece 11, and the elastic pieces 14 are held in positions from which they cannot come out of the auxiliary channels 5. In this way, the clip 1 is retained in the attachment component 2, and retention is definitely maintained.

Fig. 8D shows why the retainer piece 11 and elastic piece 14 cannot come out of the auxiliary channels 5, even if they are in or near the position shown in Fig. 8C. As already described, each of the elastic pieces 14 is formed to a length in the circumferential direction relative to the stud engagement part 9, which length is longer than the width of the retainer piece 11 and also longer than the width of the auxiliary channel 5. As a consequence, the elastic pieces 14 are fully bent by butting against the attachment component 2 to such positions that they abut against the retainer pieces 11 and cannot escape through the auxiliary channels 5. Furthermore, the elastic pieces 14 are formed on the sides of the stud engagement part 9 in a pair at positions 180 degrees apart in the circumferential direction thereof. As a consequence, pulling off is prevented at two places, and retention of the clip 1 by the attachment component 2 is definitely main-tained, even if the elastic pieces 14 are located at the position shown in Fig. 8D, which is the position where pulling off could occur most easily. Also, on the condition that a cover embodying an attachment component is attached to a vehicle body panel embodying a workpiece, and a force is applied in a direction that would remove the cover from the clip 1 the retention of the cover is definitely maintained, because the elastic pieces 14 abut against the rigid retainer pieces 11, and the clip 1 will not come off the cover.

The stud engagement part 9 is turned 90 degrees from the position shown in Fig. 7, as shown in Figs. 9 and 10. Thereby, the clip 1 is attached to the attachment component 2 in a condition wherein pulling away is prevented. The elastic pieces 14 are in the positions shown in Figs. 8C and 8D, and by the elastic force thereof, elastically engage the attachment component and provide a force that resists the turning of the stud engagement part 9 about the axis thereof. That turning-resistance force prevents the stud engagement part 9 from turning. Accordingly, the securing forces are kept high, Moreover, because the attachment component 2 is clamped between the retainer pieces 11 and flange 10 without play, there is no need to form pressing pieces or turning prevention pieces as in the conventional clips described in JP 2007-285319 A and JP 2008-128319 A. Also, because the elastic pieces work only to elastically press the attachment component toward the flange, a worker is able to handle the force required to turn the stud engagement part and can turn the stud engagement part in the direction of tightening.

Fig. 11 shows how an attachment component 2 held by the clip 1 is attached to a workpiece 6 on which a stud 7, such as a screw-threaded stud, projects. The attaching work involves only taking the clip 1 attached to the attachment component 2 and pressing it against the workpiece 6 so that the stud 7 is received in the stud engagement part 9. Engaging pawls 13 of the stud engagement part 9 engage the threaded portion of the stud 7 received in the stud engagement part 9, the clip 1 is attached to the stud 7, and in this way, the attachment component 2 is attached to the workpiece 6. The flange 10 is provided at the upper end of the stud engagement part 9, the retainer pieces 11 and elastic pieces 14 are provided on the sides of the stud engagement part 9, at positions separated from the flange 10 by a distance corresponding to the thickness of the attachment component, and the stud receiving opening 22 is formed at the lower end of the stud engagement part 9. In this way, the attachment component 2 is clamped by the flange 10, on the one hand, and by the retainer pieces 11 and elastic pieces 14, on the other hand, and attachment to the workpiece 6 is accomplished merely by placing the stud receiving opening of the stud engagement part 9 at the receiving position of the stud 7 and pressing in, and the work of effecting attachment by the stud 7 can easily be accomplished by the operation of pressing the clip 1 onto the stud 7 from one side. Furthermore, in the attaching operation, the attachment component 2 can be attached to the workpiece 6 by, instead of attaching the clip 1 to the attachment component 2 beforehand, deploying the attachment component 2 with the attachment hole thereof positioned at the stud 7 of the workpiece 6, then pressing in the clip 1 to position it so that the stud 7 is received in the stud engagement part 9 and the retainer pieces 11 pass through the auxiliary channels, and next using the finger grips 21 to turn the stud engagement part 9. After attachment, tightening can be accomplished, in the case of a screw-threaded stud, by turning the stud engagement part 9 using the finger grips 21.

## Claims

1. A clip comprising: a cylindrical stud engagement part (9) adapted to be inserted in an attachment hole (3) of an attachment component (2) and having an opening (22) for receiving and engaging a stud (7) projecting from a workpiece (6); a flange (10) provided at one end of said stud engagement part (9) opposite the stud receiving opening (22); and at least one retainer piece (11) extending outwardly in the radial direction from said stud engagement part (9) at a position near said flange (10); which retainer piece (11) is of such form that it can be inserted through auxiliary channels (5) formed continuously with said attachment hole (3) in the attachment component (2) and extending outwardly in the radial direction thereof, and which retainer piece (11) is of such length in radial direction that it will not come out of said attachment hole (3); **characterized in that** an elastic piece (14) is formed on the side facing said flange (10) of said retainer piece (11), said elastic piece (14) extending out diagonally from said retainer piece (11) toward said flange and being adapted to elastically engage the attachment component (2) and to exert a force that clamps the attachment component between said retainer piece and said flange and resists turning of said stud engagement part (9) about the axis thereof relative to the attachment component (2).

2. The clip described in claim 1, wherein two retainer pieces (11) are formed as a pair on the outer circumferential surface of the sides of said stud engagement part (9), each one positioned 180 degrees apart about the outer circumference.

3. The clip described in claim 1 or 2, wherein said retainer piece (11) has a plate-like form of a width that is shorter than the width of the auxiliary channels (5), as seen in the circumferential direction; and wherein said elastic piece is formed in cantilever shape such that, as seen in said circumferential direction, it extends from one end of said retainer piece (11) toward the other end so as to separate away from said retainer piece (11) and approach said flange (10).

4. The clip described in any one of claims 1 to 3, wherein said elastic piece (14) is formed continuous to one end of said retainer piece (11).

5. The clip described in any one of claims 1 to 4, wherein finger grips are formed on said flange for turning said stud engagement part about the axis thereof.

6. The clip described in in any one of claims 1 to 5, wherein said elastic piece (14) is formed so that its length in said circumferential direction is longer than the width of said retainer piece (11) and also longer than the width of said auxiliary channel.

7. The clip described in any one of claims 1 to 6, wherein said flange (10) is cut out in the areas where said retainer pieces and said elastic pieces are formed, as seen in a plan view of the clip, and said retainer pieces and said elastic pieces can be directly viewed in said plan view.

8. Fastening assembly comprising: a clip having a cylindrical stud engagement part (9) inserted in an attachment hole (3) of an attachment component (2), an opening (22) for receiving and engaging a stud (7) projecting from a workpiece (6), a flange (10) provided at one end of said stud engagement part (9) opposite the stud receiving opening (22), and at least one retainer piece (11) extending outwardly in the radial direction from said stud engagement part (9) at a position near said flange (10), which retainer piece (11) is of such form that it can be inserted through auxiliary channels (5) formed continuously with said attachment hole (3) in the attachment component (2) and extending outwardly in the radial direction thereof, and which retainer piece (11) is of such length in radial direction that it will not come out of said attachment hole (3); **characterized in that** said clip (1) is configured so as to clamp the attachment component (2) between said retainer piece (11) and said flange (10) and thereby support the attachment component (2), wherein an elastic piece (14) is formed on the side facing said flange (10) of said retainer piece (11), said elastic piece (14) extending out diagonally from said retainer piece (11) toward said flange (10) and being adapted to elastically engage the attachment component (2) and to exert a force that clamps the attachment component (2) between said retainer piece (11) and said flange (10) and resists turning of said stud engagement part (9) about the axis thereof relative to the attachment component (2).

9. The fastening assembly described in claim 8, wherein finger grips (21) are formed on said flange (10) for turning said stud engagement part (9) about the axis thereof.

10. The fastening assembly described in any one of claims 8 and 9, wherein said flange (10) is cut out in the areas where said retainer pieces (11) and said elastic pieces (14) are formed, as seen in a plan view of the clip (1), and said retainer pieces (11) and said elastic pieces (14) can be directly viewed in said plan view.

11. The clip described in any one of claims 8 to 10, wherein said elastic piece (14) is formed so that its length in said circumferential direction is longer than the width of said retainer piece (11) and also longer than the width of said auxiliary channel (5).

12. The fastening assembly described in any one of claims 8 to 11, wherein said flange (10) is provided at the upper end of said stud engagement part (9); said retainer piece (11) and said elastic piece (14) are provided at the sides of said stud engagement part (9) at a position that is separated from said flange (10) by a distance corresponding to the thickness of the attachment component (2); and the stud receiving opening (22) is formed at the lower end of said stud engagement part (9).

13. The fastening assembly described in any one of claims 8 to 12, wherein two retainer pieces (11) having elastic pieces (14) are formed as a pair on the outer circumferential surface of the sides of said stud engagement part (9), and are positioned 180 degrees apart about the outer circumference.

14. The fastening assembly described in any one of claims 8 to 13, wherein said workpiece (6) is a vehicle body panel, and the attachment component (2) is a cover for covering that panel.

15. The fastening assembly described in any one of claims 8 to 14, wherein said stud engagement part (9) engages a stud (7) and thereby attaches the attachment component (2) to a workpiece (6).
